# EUROPEAN PATENT APPLICATION

(11) **EP 4 411 763 A2**
(43) Date of publication of application: **07.08.2024**
(21) Application number: 24183003.3
(22) Date of filing: 24.09.2019
(51) Int. Cl.: H01F 41/088

(54) **WIRE MATERIAL WINDING DEVICE AND WINDING METHOD**

(30) Priority: 03.10.2018 JP 2018187944
(62) Divisional of application: 19869120.6
(71) Applicant: NITTOKU Co., Ltd., Saitama-city, Saitama 3300841 (JP)
(72) Inventor: KONDO, Koji, Fukushima-shi, 960-1393 (JP); MUTO, Kenichi, Fukushima-shi, 960-1393 (JP)
(74) Representative: Grünecker Patent- und Rechtsanwälte PartG mbB

(57) **Abstract**

A winding apparatus (10) for winding a wire (12) around wound member (13b) includes a supporting tool (18) for supporting the wound member (13b), a nozzle (11) formed with a wire feed hole (11a) through which the wire (12) passes, a relative moving mechanism for relatively moving the nozzle (11) with respect to the supporting tool (18), a rod (29) provided adjacent to the nozzle (11), the wire (12) fed from the nozzle (11) via the wire feed hole (11a) being configured to come into contact with the rod (29); and a rod rotating mechanism (25) configured to cause the rod (29) to follow the nozzle (11) relatively moving around the wound member (13b) by rotating the rod (29) about the wire feed hole (11a).

## Description

### TECHNICAL FIELD

The present invention relates to a winding apparatus and a winding method for wire for winding a wire fed through a wire feed hole of a nozzle on a wound member having a rectangular cross-section.

### BACKGROUND ART

A stator of an inner rotor type motor is formed by winding a wire on magnetic poles projecting from an inner peripheral side in a stator core formed by laminating a plurality of annular members. A stator of an outer rotor type motor is formed by winding a wire on a plurality of magnetic poles radially projecting from an outer peripheral side of a stator core. A winding apparatus has been proposed which includes a nozzle formed with a wire feed hole and a nozzle moving mechanism for moving the nozzle to wind a wire on each magnetic pole of the stator core.

In wire winding, a nozzle is circulated around a wound member and a wire fed through a wire feed hole of the nozzle is wound around the wound member. If a magnetic pole having a rectangular cross-section is the wound member, a so-called wire bulging phenomenon may occur in which the wire is not bent at a right angle on corner parts of the magnetic pole (wound member) and is lifted without being held in close contact with flat surface parts between the corner parts. Such bulging of the wire makes winding on an adjacent magnetic pole difficult if the wound member is a magnetic pole of a stator, and a trouble may occur in which the number of turns of the wire on the adjacent magnetic pole is reduced.

To prevent the bulging of a wire wound on a wound member having a rectangular cross-section, a method has been proposed in which two pins are provided on both sides of a nozzle and the wire is wound while being reformed by alternately causing the pins to project and retract (see, for example, JP 2013-507898A). In this method, since the wire is wound on the wound member while being reformed by the pins, the lift of the wire from surrounding flat surface parts can be suppressed.

### SUMMARY OF INVENTION

However, in the above conventional winding apparatus, the positions of the pins with respect to the wire cannot be changed. Thus, how to reform the wire could not be adjusted. That is, in the above conventional winding apparatus, the wire is reformed always constantly and the reformation given to the wire cannot be strengthened or weakened. Thus, if the wire is wound over a plurality of layers on the wound member, how the wire bulges differ between the first layer and the last layer.

The present invention aims to provide a winding apparatus and a winding method for wire capable of reforming a wire fed from a nozzle and changing a degree of reformation.

According to one aspect of the present invention, a winding apparatus for winding a wire around a wound member, includes: a supporting tool configured to support the wound member; a nozzle formed with a wire feed hole, the wire passing through the wire feed hole; a relative moving mechanism configured to relatively move the nozzle with respect to the supporting tool; a rod provided adjacent to the nozzle, the wire fed from the nozzle via the wire feed hole being configured to come into contact with the rod; and a rod rotating mechanism configured to cause the rod to follow the nozzle relatively moving around the wound member by rotating the rod about the wire feed hole.

According to other aspect of the present invention, a winding method for winding a wire fed from a wire feed hole of a nozzle around a wound member by relatively moving the nozzle around the wound member, includes: causing a rod to follow the nozzle relatively moving around the wound member by rotating the rod provided adjacent to the nozzle about the wire feed hole; and winding the wire turned toward the wound member by coming into contact with the rod after being fed from the nozzle on the wound member.

### BRIEF DESCRIPTION OF DRAWINGS

FIG. 1 is a side view showing a winding apparatus of an embodiment of the present invention,
FIG. 2 is an enlarged view of a part B of FIG. 1 showing a nozzle part of the winding apparatus according to the embodiment,
FIG. 3 is a sectional view along line C-C of FIG. 2,
FIG. 4 is a sectional view along A-A of FIG. 1 showing a state where a nozzle linearly moves in a slot between a magnetic pole being wire-wound and a magnetic pole adjacent thereto on one side,
FIG. 5 is a sectional view, corresponding to FIG. 4, showing a state where the nozzle linearly moves in a slot between the magnetic pole being wire-wound and a magnetic pole adjacent thereto on the other side,
FIG. 6 is a view showing a movement of the nozzle with respect to the magnetic pole in the embodiment,
FIG. 7 is a sectional view of an outer rotor type stator core having a wire wound by the winding apparatus according to the embodiment,
FIG. 8 is a perspective view showing a winding apparatus according to a modification of the embodiment,
FIG. 9 is a sectional view along D-D of FIG. 8 showing a state where a wire is wound on a magnetic pole by the winding apparatus according to the modification of the embodiment,
FIG. 10 is a view showing a movement of a nozzle with respect to a magnetic pole of a stator core in the modification of the embodiment,
FIG. 11 is a sectional view of an inner rotor type stator core having a wire wound by the winding apparatus according to the modification of the embodiment,
FIG. 12A is a view showing a state where a reforming strength of the wire is changed in the winding apparatus,
FIG. 12B is a view showing a state where the reforming strength of the wire is changed in the winding apparatus, and
FIG. 12C is a view showing a state where the reforming strength of the wire is changed in the winding apparatus.

### DESCRIPTION OF EMBODIMENT

Next, an embodiment of the present invention is described with reference to the drawings.

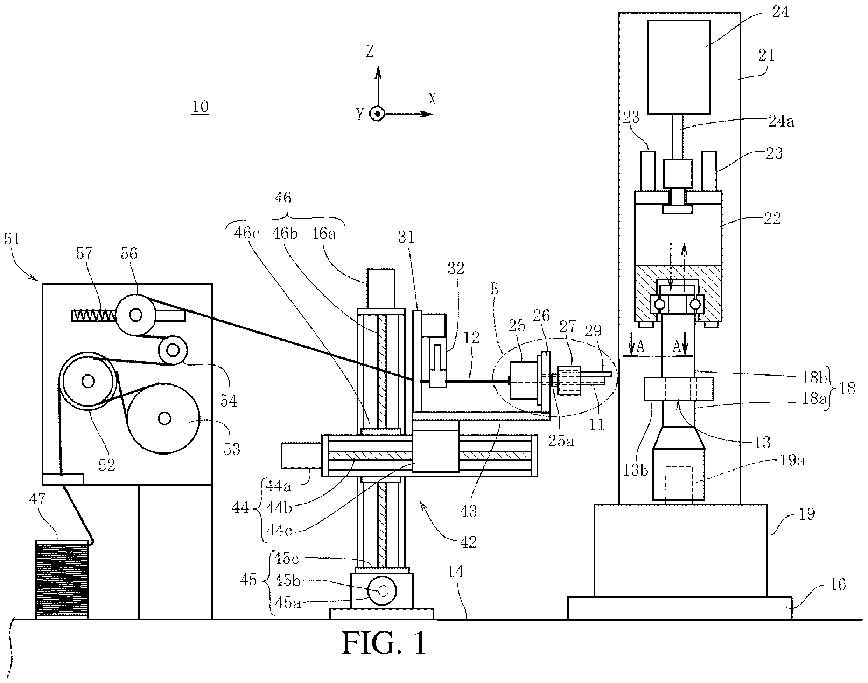

A wire winding apparatus 10 in an embodiment is shown in FIG. 1. In the following description, the configuration of the winding apparatus 10 is described, assuming that three axes of X, Y and Z orthogonal to each other are set in each figure, an X axis extends substantially in a horizontal front-rear direction, a Y axis extends substantially in a horizontal lateral direction and a Z axis extends in a vertical direction.

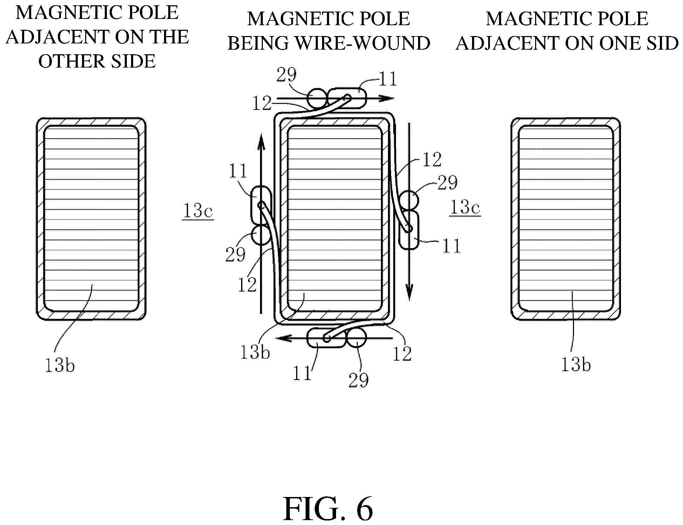

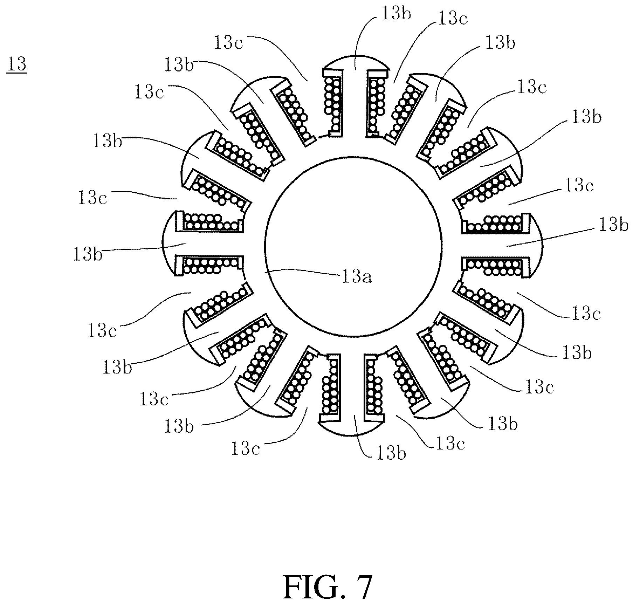

The winding apparatus 10 winds a wire 12 fed from a nozzle 11 on magnetic poles 13b of a stator core 13. The magnetic poles 13b of the stator core 13 have a rectangular cross-sectional shape. Specifically, a case is shown in which members to be wound in the present embodiment are the magnetic poles 13b of the stator core 13 having a rectangular cross-section (FIG. 6). Further, as shown in FIG. 7, the stator core 13 is of an outer rotor type and includes an annular part 13a having a circular ring shape and a plurality of the magnetic poles 13b radially projecting outwardly of the annular part 13a from the outer peripheral surface of the annular part 13a.

As shown in FIG. 1, the winding apparatus 10 includes a machine stand 14 installed in an installation place. A table 16 is provided on the machine stand 14. A supporting tool 18 for supporting the stator core 13 is provided on the table 16. Further, a rocking servo motor 19 including a rotary shaft 19a extending in a Z-axis direction and a mounting plate 21 shifted from the rocking servo motor 19 in a Y-axis direction and adjacent to the rocking servo motor 19 are provided on the table 16. The supporting tool 18 includes a rod-like core member 18a having the stator core 13 horizontally placed on an upper end edge (upper end surface) thereof and extending in the vertical direction, and a pressing member 18b for pressing the stator core 13 placed on the upper end edge of the rod-like core member 18a from above.

The rod-like core member 18a has a lower end thereof mounted on the rotary shaft 19a of the rocking servo motor 19, and an upper part thereof is formed to have an outer diameter slightly smaller than that of the annular part 13a (FIG. 7) of the stator core 13. Linear motion guide rails 23 are mounted to extend in the vertical direction on a side of the mounting plate 21 facing the rocking servo motor 19. An elevating member 22 is mounted on the guide rails 23 to be vertically movable.

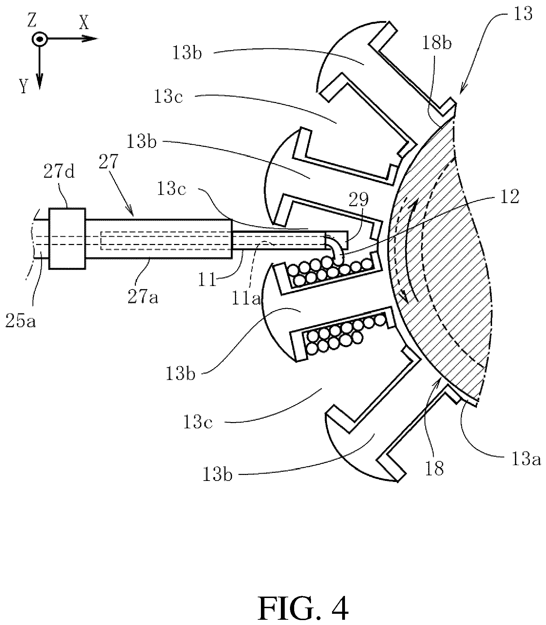

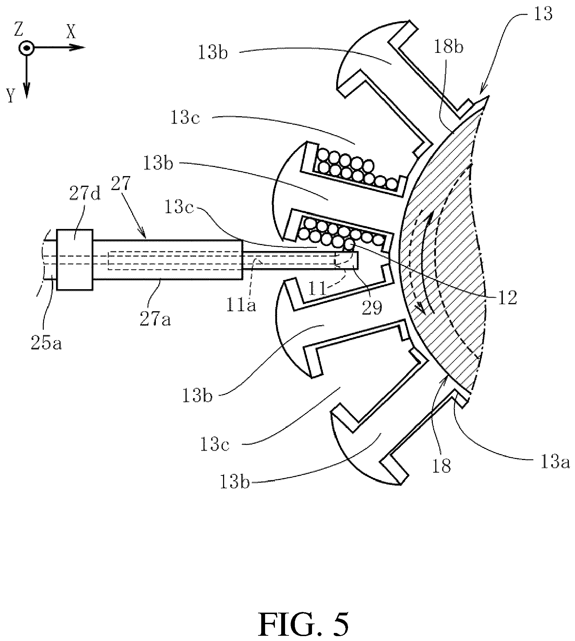

The pressing member 18b is so mounted on the elevating member 22 that a vertical axis in a center thereof coincides with a center axis of the rod-like core member 18a and the pressing member 18b is rotatable about the vertical axis. A lower part of the pressing member 18b for actually pressing the stator core 13 placed on the upper end edge of the rod-like core member 18a from above is formed to have an outer diameter slightly smaller than that of the annular part 13a of the stator core 13 (FIGS. 4 and 5). Further, the annular part 13a of the stator core 13 is sandwiched by the rod-like core member 18a and the pressing member 18b, and the magnetic poles 13b radially project outward from the annular part 13a. The nozzle 11 is configured to be able to circulate around each magnetic pole 13b.

A lower end of the rod-like core member 18a is mounted on the rotary shaft 19a of the rocking servo motor 19, and the rod-like core member 18a rotates together with the rotary shaft 19a when the rotary shaft 19a of the servo motor 19 rotates. In this way, the stator core 13 sandwiched by the rod-like core member 18a and the pressing member 18b rotates about a center axis of the supporting tool 18 composed of the rod-like core member 18a and the pressing member 18b. The stator core 13 is placed on the upper end edge of the rod-like core member 18a and configured such that a center thereof coincides with a center axis of the supporting tool 18. The magnetic poles 13b around the stator core 13 are configured to be rockable by the rotation of the stator core 13.

As just described, the rocking servo motor 19 is configured to function as a member moving mechanism for moving the stator core 13 such that the magnetic poles 13b rock. An elevation cylinder 24 for moving the elevating member 22 upward and downward together with the pressing member 18b is provided on the mounting plate 21 above the elevating member 22.

Further, the winding apparatus 10 is provided with a nozzle moving mechanism 42 for moving a moving table 43 provided with the nozzle 11 in three axis directions. The nozzle moving mechanism 42 is constituted by a combination of the moving table 43 and X-axis, Y-axis and Z-axis direction telescopic actuators 44 to 46 for moving the moving table 43 in the three axis directions. Each of these telescopic actuators 44 to 46 is composed of a ball screw 44b to 46b to be rotational driven by a servo motor 44a to 46a, a follower 44c to 46c threadably engaged with the ball screw 44b to 46b to move in parallel, and the like.

In the present embodiment, the moving table 43 is mounted on the follower 44c of the X-axis direction telescopic actuator 44 movably in the X-axis direction, and the X-axis direction telescopic actuator 44 is mounted on the follower 46c of the Z-axis direction telescopic actuator 46 movably in the Z-axis direction. Further, the Z-axis direction telescopic actuator 46 is mounted on the follower 45c of the Y-axis direction telescopic actuator 45 movably in the Y-axis direction, and the Y-axis direction telescopic actuator 45 is mounted on the machine stand 14.

The servo motor 44a to 46a in each telescopic actuator 44 to 46 is connected to a control output of an unillustrated controller. The nozzle moving mechanism 42 is configured to be able to arbitrarily move the nozzle 11 provided on the moving table 43 in the three axis directions together with the moving table 43 on the basis of a command from the controller.

The wire 12 is wound on a reel 47, and the reel 47 serves as a supply source for the wire 12. The reel 47 is placed in another place separated from the nozzle moving mechanism 42, e.g. on the machine stand 14 or the like. A straightening device 51 for straightening the wire 12 fed from the reel 47 serving as the supply source is provided on the machine stand 14.

The straightening device 15 includes a pair of routing pulleys 52, 53 for routing the wire 12 fed from the reel 47 into an "8 shape", and a fixed pulley 54 and a movable pulley 56 for turning the wire 12 having passed through the pair of routing pulleys 52, 53 into an "S shape". The wire 12 is configured to be turned by the fixed pulley 54 and the movable pulley 56 moves in a direction toward the moving table 43. The movable pulley 56 is biased in a direction away from the moving table 43 by a coil spring 57. The coil spring 57 prevents the wire 12 from being slackened when the moving table 43 moves by biasing the movable pulley 56.

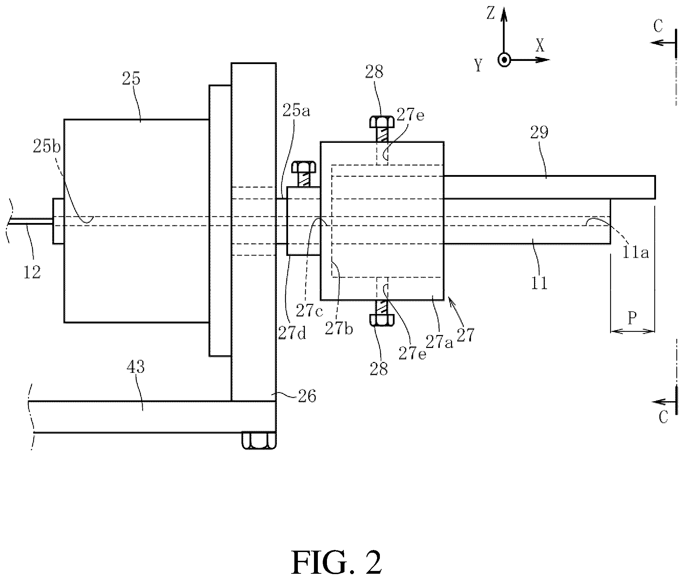

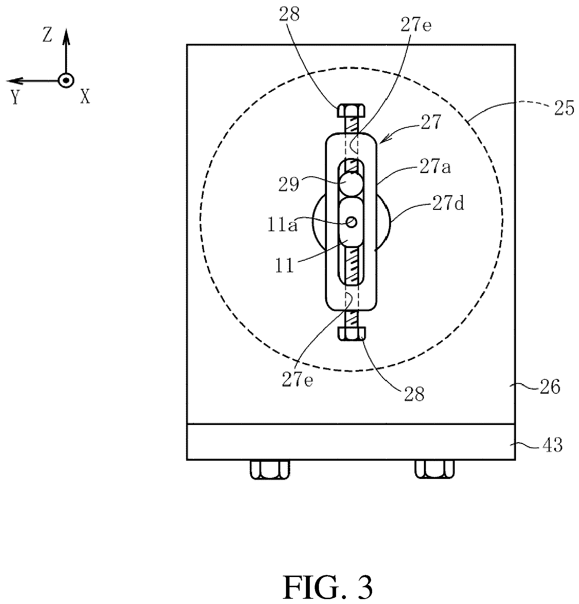

The nozzle 11 is provided on the tip of the moving table 43 facing the stator core 13 via a servo motor 25. As shown in detail in FIGS. 2 and 3, a supporting wall 26 stands on the tip of the moving table 43 facing the stator core 13. The servo motor 25 is so mounted on the supporting wall 26 that a rotary shaft 25a thereof is horizontal. The servo motor 25 is formed with a through hole 25b in a center of the rotary shaft 25a. A nozzle holder 27 is mounted on the tip of the rotary shaft 25a facing the stator core 13.

As shown in FIG. 2, the nozzle holder 27 is a bottomed tubular member including a tubular part 27a and a bottom part 27b. The tubular part 27a has a rectangular cross-section (see FIG. 3). A communication hole 27c communicating with a center hole of the tubular part 27a is formed in a center of the bottom part 27b. Further, a tubular mounting part 27d into which the rotary shaft 25a of the servo motor 25 is fittable is formed to surround the communication hole 27c on a side of the bottom part 27b opposite to a side continuous with the tubular part 27a. The tubular mounting part 27d is fit to the rotary shaft 25a and screwed, whereby the nozzle holder 27 is mounted on the tip of the rotary shaft 25a of the servo motor 25 while causing the communication hole 27c formed in the bottom part 27b to be continuous with the through hole 25b of the rotary shaft 25a.

The nozzle 11 is sized to be insertable into the tubular part 27a of the nozzle holder 27, and a wire feed hole 11a is provided to penetrate through a center of the nozzle 11. The nozzle 11 is so housed in the nozzle holder 27 that the through hole 25b of the rotary shaft 25a of the servo motor 25 and the wire feed hole 11a are continuous.

The tubular part 27a of the nozzle holder 27 having a rectangular cross-section is formed with internally threaded holes 27e respectively in parts constituting short sides of the rectangular cross-sectional shape, and the internally threaded holes 27e are formed to extend in a direction perpendicular to the through hole 27c. By threadably engaging a male screw 28 into each internally threaded hole 27e and bringing an end part of the male screw 28 into contact with the nozzle 11 housed in the tubular part 27a, the nozzle 11 is fixed in the nozzle holder 27.

Further, a rod (reforming bar) 29 is provided adjacent to the nozzle 11 on the rotary shaft 25a of the servo motor 25. The rod 29 is a bar-like member made of metal and having a circular cross-section, and the rod 29 has such an outer diameter as to be insertable into the tubular part 27a in the nozzle holder 27. The rod 29 is housed in the nozzle holder 27 to be in parallel to the wire feed hole 1 1a of the nozzle 11 and deviated from the wire feed hole 11a in a radial direction of the wire feed hole 11a. The rod 29 is mounted in the nozzle holder 27 together with the nozzle 11 by the male screws 28 tightened from both sides in a direction intersecting the wire feed hole 11a. As the nozzle 11 is moved via the moving table 43 by the nozzle moving mechanism 42, the rod 29 mounted in the same nozzle holder 27 as the nozzle 11 also moves together with the nozzle 11.

Further, as shown in FIG. 2, the rod 29 is so provided that a projecting end thereof projects further from the nozzle holder 27 than the tip edge of the nozzle 11. That is, the projecting end of the rod 29 projects further in the X-axis direction toward the stator core 13 than the tip of the nozzle 11 (see FIG. 1). If the wire 12 fed from the wire feed hole 1 1a of the nozzle 11 is bent at the tip edge of the nozzle 11, the bent wire 12 can come into contact with the rod 29 further projecting than the tip edge of the nozzle 11. Thus, a projecting amount P of the rod 29 projecting from the tip edge of the nozzle 11 is adjusted to be at least larger than an outer diameter of the wire 12. An outer surface of a tip part of the rod 29 with which the wire 12 comes into contact is finished by polishing such that the wire 12 is slidable.

Further, as described above, the rod 29 is provided in the nozzle holder 27 in a manner deviating with respect to the rotary shaft 25a formed with the through hole 25b coaxial with the wire feed hole 11a. Thus, the nozzle holder 27 and the servo motor 25 constitute a rod rotating mechanism for rotating the rod 29 about the wire feed hole 11a of the nozzle 11 around the wire feed hole 11a.

As shown in FIG. 1, the moving table 43 is provided with a passing plate 31. The passing plate 31 is formed with a hole (not shown) through which the wire 12 supplied from the reel 47 via the straightening device 51 passes. The wire 12 having passed through the passing plate 31 via this unillustrated hole reaches the servo motor 25 provided on the moving table 43 and is inserted through the nozzle 11 through the through hole 25b. A chuck device 32 capable of gripping the wire 12 having passed through the passing plate 31 is provided on the passing plate 31.

Next, a winding method using the winding apparatus 10 is described.

In the winding method using the winding apparatus 10, the stator core 13 is first supported by the supporting tool 18. Specifically, in supporting the stator core 13, the nozzle moving mechanism 42 keeps the nozzle 11 away from the supporting tool 18. In that state, a rod 24a of the elevating cylinder 24 provided on the mounting plate 21 is caused to sink, whereby the elevating member 22 is moved upward and the pressing member 18b mounted on the elevating member 22 is moved upward as indicated by a dashed-dotted line of FIG. 1. In this way, a space is formed below the pressing member 18b and between the rod-like core member 18a and the pressing member 18b.

Then, the stator core 13 is horizontally placed on the upper edge of the rod-like core member 18a via that space. Further, the rod 24a of the elevating cylinder 24 is caused to project to move the elevating member 22 downward as indicated by a two-dot chain line of FIG. 1. In this way, the stator core 13 placed on the upper edge of the rod-like core member 18a is pressed from above by the pressing member 18b as shown in FIG. 1 by the pressing member 18b moving downward together with the elevating member 22.

Thereafter, the nozzle 11 is moved in three-dimensional directions with respect to the stator core 13 by the nozzle moving mechanism 42 capable of moving the nozzle 11 at least in the Z-axis direction and the rocking servo motor 19 for operating the stator core 13 to rock the magnetic poles 13b. In this way, the end part of the wire 12 fed from the tip of the nozzle 11 via the wire feed hole 11a is fixed by being entwined around an unillustrated entwining pin or wire clamping device.

Subsequently, actual winding is performed. In actual winding, the nozzle 11 is reciprocally moved along the Z-axis direction by the nozzle moving mechanism 42 and the stator core 13 is alternately rotated in forward and reverse directions by the rocking servo motor 19 so that the magnetic pole 13b being wire-wound rocks. By a combination of these operations, the nozzle 11 is rotationally moved around the magnetic pole 13b in a rectangular shape along the cross-sectional shape of the magnetic pole 13b. In this way, a relative moving mechanism for relatively moving the nozzle 11 with respect to the supporting tool 18 is constituted by the nozzle moving mechanism 42 and the rocking servo motor 19 serving as the member moving mechanism.

A rotational movement of the nozzle 11 in a rectangular shape is specifically described with reference to FIG. 4. A case is described in which the rotational movement starts from a state where the tip of the nozzle 11 is inserted in a slot 13c formed between the magnetic pole 13b and the magnetic pole 13b adjacent thereto on one side as shown in FIG. 4. In this case, only the nozzle 11 is first moved upward without rocking the magnetic poles 13b by the rocking servo motor 19.

If the tip of the nozzle 11 comes out from the slot 13c, an upward movement of the nozzle 11 is stopped. Then, the rocking of the magnetic poles 13b is started as indicated by a solid-line arrow of FIG. 4, and the rocking is finished when the tip of the nozzle 11 comes to be located above a slot 13c between the magnetic pole 13b being wire-wound and the magnetic pole 13b adjacent thereto on the other side as shown in FIG. 5. In this way, the tip of the nozzle 11 moves along an end edge of the magnetic pole 13b outside the slot 13c.

After the tip of the nozzle 11 reaches the slot 13c sandwiched by the magnetic pole 13b being wire-wound and the other magnetic pole 13b adjacent thereto and the rocking of the magnetic poles 13b is stopped, the nozzle 11 is moved downward. A downward movement of the nozzle 11 is stopped when the tip of the nozzle 11 comes out downward from the slot 13c adjacent to the magnetic pole 13b being wire-wound.

Subsequently, the magnetic poles 13b are rocked in the reverse direction indicated by a broken-line arrow in FIG. 5, and the rocking is finished when the tip of the nozzle 11 comes to be located below the first slot 13c.

Specifically, after the nozzle 11 comes out downward from the slot 13c adjacent to the magnetic pole 13b being wire-wound, the downward movement of the nozzle 11 is stopped. Subsequently, the rocking of the magnetic poles 13b is started and the rocking is finished when the tip of the nozzle 11 reaches a position below the first slot 13c. In this way, the tip of the nozzle 11 moves in a rectangular shape along the outer periphery of the magnetic pole 13b having a rectangular cross-section around the magnetic pole 13b as shown in FIG. 6.

As shown in FIG. 6, if the nozzle 11 is moved in the rectangular shape around the magnetic pole 13b, which is a wound member having a rectangular cross-section, the wire 12 fed via the wire feed hole 11a of the nozzle 11 is wound on that magnetic pole 13b.

On the other hand, if the wire 12 is wound around the magnetic pole 13b having the rectangular cross-section, such a phenomenon may occur in which the wire 12 bulges on corner parts in a rectangular shape by being lifted without being bent at a right angle and without being held in close contact with flat surface parts between the corner parts.

In contrast, the rod 29 is provided adjacent to the nozzle 11 in the present embodiment. As shown in FIG. 6, the rod 29 moves together with the nozzle 11 to chase the nozzle 11 from behind, and follows the nozzle 11. In this way, the wire 12 fed from the tip of the nozzle 11 via the wire feed hole 11a comes into contact with the rod 29 following the nozzle 11 and extends along the outer surface of the magnetic pole 13b after being bent in a lateral direction perpendicular to a moving direction of the rod 29, i.e. toward the magnetic pole 13b.

Thus, the wire 12 comes into contact with the rod 29 before extending along the outer surface of the magnetic pole 13b from the tip of the nozzle 11 and is convexly curved toward the magnetic pole 13b. As a result, the wire 12 is reformed to be curved convexly toward the magnetic pole 13b. As just described, in the winding apparatus 10 in which the rod 29 is provided adjacent to the nozzle 11, the wire 12 can be reformed by causing the rod 29 to follow the nozzle 11 to chase after the nozzle 11. A convex part of the curved wire 12 reformed in this way approaches the outer surface of the magnetic pole 13b and the wire 12 is easily brought into contact with the outer surface of the magnetic pole 13b as compared to the case where the wire 12 is not reformed by the rod 29. Thus, the lift of the wire 12 from the flat surface parts around the magnetic pole 13b can be suppressed by winding the wire 12 on the magnetic pole 13b serving as the wound member with the wire 12 reformed in advance by the rod 29. In other words, the wire 12 fed from the nozzle 11 can be wound on the magnetic pole 13b while being caused to extend along the outer surface of the rectangular magnetic pole 13b by being reformed by the rod 29.

Further, the winding apparatus 10 includes the servo motor 25 constituting the rod rotating mechanism for rotationally moving the rod 29 about the wire feed hole 11a around the wire feed hole 11a. Thus, even if the nozzle 11 is moved in the rectangular shape around the magnetic pole 13b having the rectangular cross-section, the rod 29 can be reliably caused to follow the nozzle 11 from behind in the moving direction of the nozzle 11 by rotationally moving the position of the rod 29 with respect to the wire feed hole 11a.

Specifically, in the winding apparatus 10, the rod 29 can be caused to follow the nozzle 11 passing through the slot 13c and moving along the magnetic pole 13b (moving in the lateral direction in FIG. 6) outside the magnetic pole 13b without being limited to the case where the rod 29 is caused to follow the nozzle 11 having passed through the slot 13c as shown in FIG. 6.

Thus, both the wire 12 fed from the nozzle 11 passing through the slot 13c and the wire 12 fed from the nozzle 11 moving along and outer side the magnetic pole 13b after passing through the slot 13c can be reformed. Therefore, the lift of the wire 12 from each peripheral surface of the magnetic pole 13b having the rectangular cross-section can be effectively suppressed.

Further, in order to wind the wire 12 in alignment on the magnetic pole 13b, the nozzle 11 is rotationally moved around the magnetic pole 13b and the position of the nozzle 11 with respect to the magnetic pole 13b is shifted in the X-axis direction by an amount of a diameter of the wire 12 on every turn of the wire 12. In this way, the wire 12 can be effectively wound in alignment on the magnetic pole 13b. Here, in the winding apparatus 10 in the present embodiment, the nozzle 11 can be moved in the X-axis direction by the nozzle moving mechanism 42.

After all the magnetic poles 13b are wire-wound in this way and the winding on all the magnetic poles 13b is finished, the stator core 13 is removed from the supporting tool 18. Specifically, in this removal, the nozzle moving mechanism 42 moves the nozzle 11 away from the stator core 13. In that state, the rod 24a of the elevating cylinder 24 provided on the mounting plate 21 is caused to sink and the pressing member 18b is moved upward together with the elevating member 22 as indicated by the dashed-dotted line of FIG. 1. In this way, the pressing of the stator core 13 by the pressing member 18b is released and a space is formed above the stator core 13. Then, the stator core 13 placed on the upper end of the rod-like core member 18a is removed from the rod-like core member 18a via that space and a series of winding methods are finished.

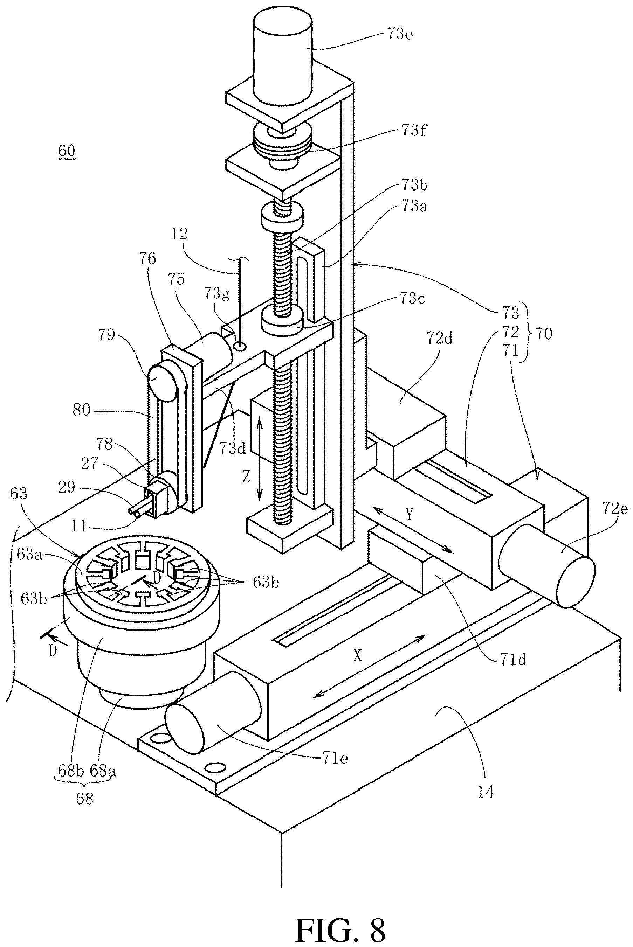

A modification of the present embodiment is shown in FIGS. 8 to 11. The same components as those of the apparatus in the previous embodiment are denoted by the same reference signs and repeated description is omitted.

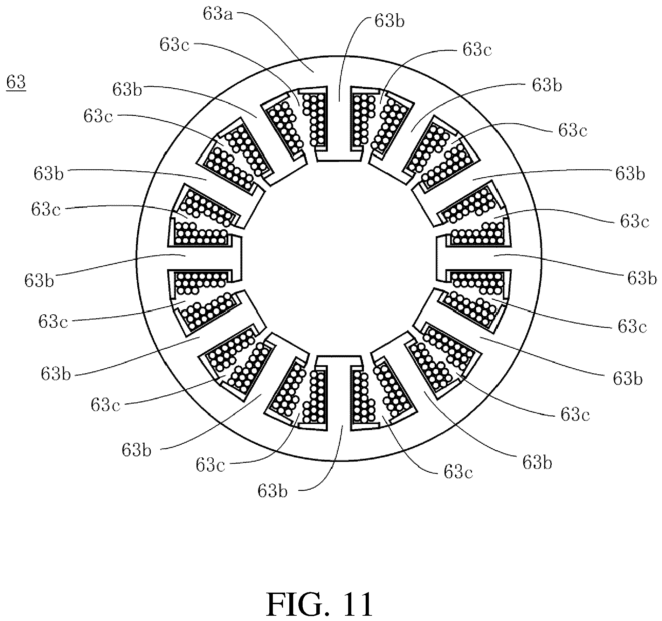

As shown in FIG. 11, in a winding apparatus 60 in the modification, a stator core 63 to be wire-wound is of an inner rotor type. The stator core 63 includes an annular part 63a having a circular ring shape and a plurality of magnetic poles 63b projecting toward a center of the annular part 63a from the inner peripheral surface of the annular part 63a.

As shown in FIG. 8, a supporting tool 68 for carrying the stator core 63 is provided on a machine stand 14 in the winding apparatus 60. The supporting tool 68 includes a fixed table 68a disposed on the machine stand 14, a turntable 68b mounted on the fixed table 68a rotatably in a horizontal plane, the stator core 63 being mountable and fixable above the rotary table 68b, and an unillustrated rocking servo motor for rotating the turntable 68b.

The winding apparatus 60 includes the machine stand 14 provided with the supporting tool 68 and installed in an installation place, and a nozzle moving mechanism 70 provided on the machine stand 14 to drive a nozzle 11 in three axis directions. The nozzle moving mechanism 70 is formed by combining driving units 71, 72 and 73 of the three axis directions and includes a front-rear direction driving unit 71, a lateral direction driving unit 72 and a vertical direction driving unit 73. These driving units 71, 72 and 73 are substantially the same driving mechanisms along driving directions X, Y and Z.

First, the vertical direction driving unit 73 is described. The vertical direction driving unit 73 includes a vertical direction guide 73a disposed along the driving direction Z, a vertical direction rotary shaft 73b disposed in parallel to the vertical direction guide 73a and having an external thread disposed on a surface, a vertical direction moving part 73c threadably engaged with the vertical direction rotary shaft 73b by a ball screw and movable along the vertical direction guide 73a, a vertical direction connecting part 73d to be connected to the vertical direction moving part 73c, and a vertical direction drive source 73e for rotationally driving the vertical direction rotary shaft 73b. The vertical direction rotary shaft 73b is connected to the vertical direction drive source 73e by a universal joint 73f. A moving range of the vertical direction moving part 73c in the driving direction Z is set by a range of the external thread disposed on the vertical direction rotary shaft 73b.

Each of the front-rear direction driving unit 71 and the lateral direction driving unit 72 is disposed along the driving direction X, Y shown in FIG. 8 as a structure similar to the vertical direction driving unit 73. The front-rear direction driving unit 71 is fixed to the machine stand 14 and includes a front-rear direction drive source 71e, and the lateral direction driving unit 72 is disposed to be movable in a front-rear direction with respect to the front-rear direction driving unit 71 via a front-rear direction connecting part 71d. The lateral direction driving unit 72 includes a lateral direction drive source 72e, and the vertical direction driving unit 73 is disposed to be movable in the lateral direction with respect to the lateral direction driving unit 72 via a lateral direction connecting part 72d. For example, a servo motor capable of highly accurate control is used as each of the drive sources 71e, 72e and 73e.

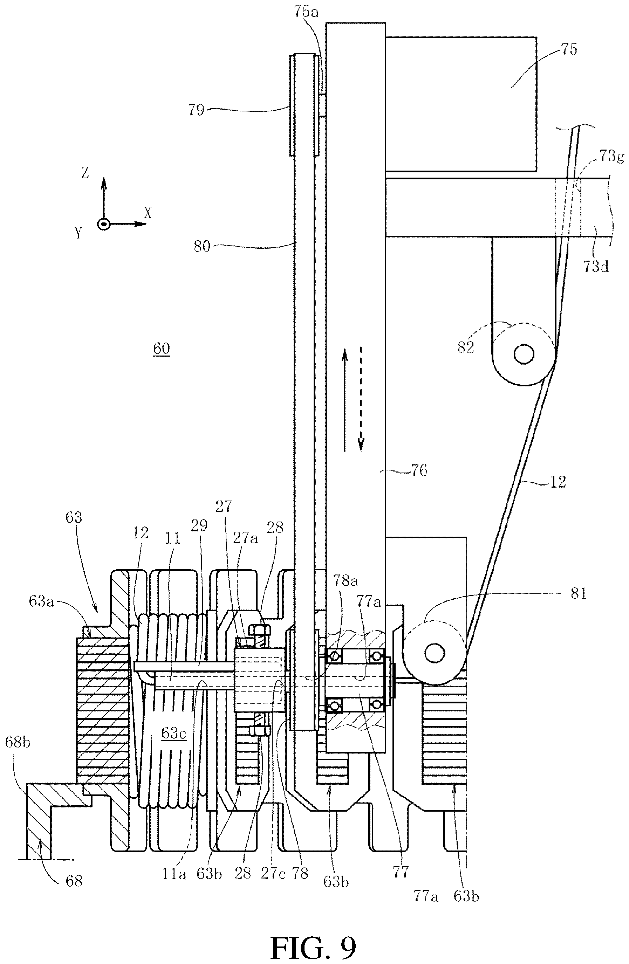

The upper end of a supporting plate 76 long in the vertical direction and insertable into the stator core 63 is mounted on the tip of the vertical direction connecting part 73d of the vertical direction driving unit 73. As shown in FIG. 9, a rotary body 77 is rotatably supported in a lower part of the supporting plate 76 with a rotary shaft thereof extending in a horizontal direction. A pulley 78 is coaxially provided on the rotary body 77. The nozzle holder 27 described in the above embodiment is further coaxially provided on the pulley 78.

The rotary body 77 and the pulley 78 are formed with first and second communication holes 77a, 78a continuous along center axes of rotation thereof. The communication hole 27c of the nozzle holder 27 is continuous with these first and second communication holes 77a, 78a. As in the above embodiment, the nozzle 11 is so inserted into the tubular part 27a of the nozzle holder 27 that a wire feed hole 11a communicates with the communication hole 27c. Further, a rod 29 is further inserted adjacent to the nozzle 11 into the tubular part 27a. The nozzle 11 and the rod 29 are mounted in the tubular part 27a by male screws 28.

A servo motor 75 for rotationally moving the rod 29 about the wire feed hole 11a of the nozzle 11 is provided in an upper part of the supporting plate 76. A pulley 79 is provided on a rotary shaft 75a of the servo motor 75. A belt 80 is provided between the pulley 79 and the pulley 78 coupled to the nozzle holder 27.

As in the above embodiment, the nozzle 11 having the wire feed hole 11a penetrating in a center and the rod 29 are inserted through the tubular part 27a of the nozzle holder 27. The nozzle 11 and the rod 29 are so fixedly provided in the nozzle holder 27 that the communication hole 27c of the nozzle holder 27 and the wire feed hole 11a in the nozzle 11 are continuous.

The rod 29 is provided to deviate from the wire feed hole 11a in the nozzle 11, and the nozzle holder 27 rotates together with the pulley 78 via the belt 80 if the servo motor 75 is driven. As just described, the nozzle holder 27 and the servo motor 75 constitute a rod rotating mechanism for rotationally moving the rod 29 about the wire feed hole 11a of the nozzle 11 around the wire feed hole 11a.

As shown in FIG. 9, a first pulley 81 for turning the wire 12 having passed through the wire feed hole 11a of the nozzle 11 is provided on the supporting plate 76. The vertical direction connecting part 73d is formed with a hole 73g through which the wire 12 passes. The vertical direction connecting part 73d is provided with a second pulley 82 for further turning the wire 12 passed through the nozzle 11 and turned by the first pulley 81 toward the hole 73g. The wire 12 fed from an unillustrated wire supply source passes through the hole 73g formed in the vertical direction connecting part 73d, is turned by the second pulley 82 and further turned by the first pulley 81, and passes through the wire feed hole 1 1a of the nozzle 11.

Next, a winding method using such a winding apparatus 60 is described.

First, the wire 12 is passed through the nozzle 11 and fed from the tip of the nozzle 11. In starting winding, the nozzle moving mechanism 70 moves the nozzle 11 in three-dimensional directions and fixes an end part of the wire 12 by entwining the wire 12 around an unillustrated entwining pin or wire clamping device.

Thereafter, the nozzle moving mechanism 70 is driven to move the nozzle 11 at a horizontal position to a slot 63c between the magnetic pole 63b intended to be wire-wound and the magnetic pole 63 adjacent thereto in the stator core 11 as shown in FIG. 9.

Then, actual winding is performed next. In actual winding, the nozzle 11 is reciprocally moved along the Z-axis direction by the nozzle moving mechanism 70 and the turntable 68b is rotated in forward and reverse directions together with the stator core 63 by the rocking servo motor of the supporting tool 68 so that the magnetic pole 63b being wire-wound rocks. By a combination of these operations, the nozzle 11 is rotationally moved in a rectangular shape around the magnetic pole 63b along the cross-sectional shape of the magnetic pole 63b.

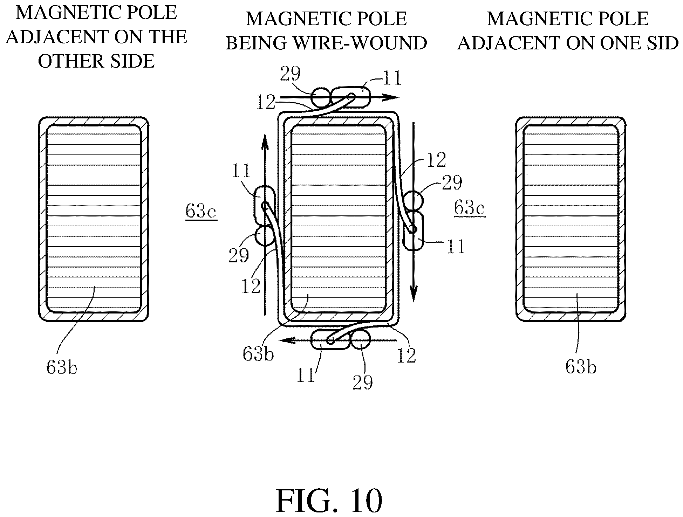

As shown in FIG. 10, in a rotational movement of the nozzle 11 in a rectangular shape, only the nozzle 11 is moved downward or upward without rocking the magnetic poles 63b by the rocking servo motor in the supporting tool 68 if the tip of the nozzle 11 is located in the slot 63c sandwiched by the magnetic pole 63b being wire-wound and the magnetic pole 63b adjacent thereto.

The rocking of the magnetic poles 63b is started when the tip of the nozzle 11 comes out from that slot 63c, and the rocking is finished when the tip of the nozzle 11 comes to be located below or above the adjacent slot 63c between the magnetic pole 63b being wire-wound and the magnetic pole 63b adjacent thereto.

Specifically, the rocking of the magnetic poles 63b is started with the tip of the nozzle 11 coming out downward or upward from the first slot 63c, and that rocking is finished when the tip of the nozzle 11 reaches another adjacent slot 63c. In this way, the nozzle 11 can be rotationally moved in the rectangular shape around the magnetic pole 63b along the cross-sectional shape of the magnetic pole 63b.

As just described, if the nozzle 11 is moved in the rectangular shape around the magnetic pole 63b serving as a wound member having a rectangular cross-section, the wire 12 fed via the wire feed hole 11a of the nozzle 11 is wound on the magnetic pole 63b.

On the other hand, if the wire 12 fed after passing through the wire feed hole 1 1a of the nozzle 11 is wound around the magnetic pole 63b serving as the wound member having the rectangular cross-section, such a phenomenon may occur in which the wire 12 bulges on corner parts in the rectangular shape by being lifted without being bent at a right angle and without being held in close contact with flat surface parts between the corner parts.

In contrast, the rod 29 is provided adjacent to the nozzle 11 in the present modification. Thus, as shown in FIG. 10, the rod 29 moves together with the nozzle 11 to chase the nozzle 11 from behind, and follows the nozzle 11.

In this way, the wire 12 fed from the tip of the nozzle 11 via the wire feed hole 11a comes into contact with the rod 29 following the nozzle 11 and extends along the outer surface of the magnetic pole 63b after being bent in a lateral direction perpendicular to a moving direction of the rod 29, i.e. toward the magnetic pole 63b. Thus, the wire 12 comes into contact with the rod 29 to be curved before extending along the outer surface of the magnetic pole 63b from the tip of the nozzle 11, and is reformed to be curved in that way.

Accordingly, also in this winding apparatus 60 for winding the wire on the inner rotor type stator core 63, the rod 29 is provided adjacent to the nozzle 11 and the wire 12 can be reformed by moving the rod 29 to chase after the nozzle 11. By winding the wire 12 on the magnetic pole 63b serving as the wound member with the wire 12 reformed in advance by the rod 29, the lift of the wire 12 from the flat surface parts around the magnetic pole 63b can be suppressed.

Further, the winding apparatus 60 includes the servo motor 75 serving as the rod rotating mechanism for rotationally moving the rod 29 about the wire feed hole 11a of the nozzle 11 around the wire feed hole 11a. Thus, even if the nozzle 11 is moved in the rectangular shape around the magnetic pole 63b having the rectangular cross-section, the rod 29 can be reliably caused to follow the nozzle 11 by rotationally moving the position of the rod 29 with respect to the wire feed hole 11a.

Thus, the rod 29 can be caused to follow the nozzle 11 having passed through the slot 63c and moving along the magnetic pole 63b outside the magnetic pole 63b without being limited to the case where the rod 29 is caused to follow the nozzle 11 passing through the slot 63. In this way, both the wire 12 fed from the nozzle 11 passing through the slot 63c and the wire 12 fed from the nozzle 11 moving along and outer side the magnetic pole 63b after passing through the slot 63c can be reformed. Therefore, the lift of the wire 12 from each peripheral surface of the magnetic pole 63b serving as the wound member having the rectangular cross-section can be effectively suppressed.

Further, in order to wind the wire 12 in alignment on the magnetic pole 63b, the nozzle 11 is rotationally moved around the magnetic pole 63b and the position of the nozzle 11 with respect to the magnetic pole 63b is shifted in the X-axis direction by an amount of a diameter of the wire 12 on every turn of the wire 12. In this way, the wire 12 can be effectively wound in alignment on the magnetic pole 63b. In the winding apparatus 60 in the present modification, the nozzle 11 can be moved in the X-axis direction by driving the front-rear direction drive source 71e of the front-rear direction driving unit 71 to move the front-rear direction connecting part 71d in the X-axis direction.

Here, the magnetic poles 13b, 63b in the above embodiment and modification respectively have the rectangular cross-sectional shape. If the nozzle 11 is inserted as closely to the magnetic pole 13b, 63b being wire-wound as possible without contacting the wire 12 wound on the magnetic pole 13b, 63b, a clearance formed between the nozzle 11 and the magnetic pole 13b, 63b being wire-wound can be reduced. In this way, the wire 12 is reformed to be curved with a relatively small radius of curvature by the rod 29 and, along with that, the wire 12 is wound on the magnetic pole 13b, 63b near the nozzle 11, wherefore a winding disturbance can be avoided.

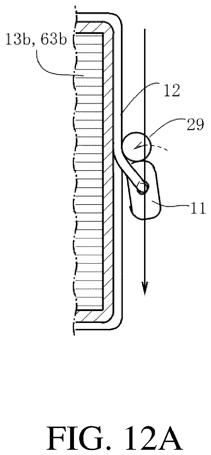

Further, the above winding apparatus 10, 60 includes the servo motor 25, 75 constituting the rod rotating mechanism for rotationally moving the rod 29 about the wire feed hole 11a around the wire feed hole 11a. Thus, by shifting the position of the rod 29 located behind the nozzle 11 in a traveling direction in a width direction (direction perpendicular to the traveling direction) with respect to the traveling direction by the servo motor 25, 75 as shown in FIGS. 12A to 12C, a curved degree of the wire 12 coming into contact with the rod 29 to be turned toward the magnetic pole 13b, 63b can be changed.

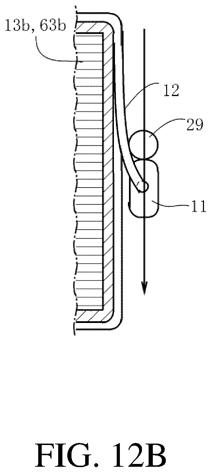

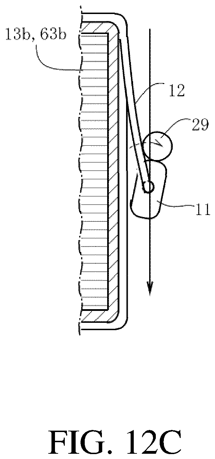

FIGS. 12A, 12B and 12C show examples of moving paths of the nozzle 11 and the rod 29. In FIGS. 12A, 12B and 12C, the moving path of the nozzle 11 is indicated by a solid-line arrow. FIG. 12B shows a case where the rod 29 is caused to follow in the same path from behind the nozzle 11 in the traveling direction. That is, in the example of FIG. 12B, the rod 29 moves on the moving path of the nozzle 11 indicated by the solid-like arrow. On the other hand, in the example shown in FIG. 12A, the position of the rod 29 located behind the nozzle 11 in the traveling direction is shifted toward the magnetic pole 13b, 63b side by the servo motor 25, 75 as shown by a broken-like arrow without changing an interval between the nozzle 11 and the magnetic pole 13b, 63b with respect to the example shown in FIG. 12B. If the nozzle 11 is moved as indicated by the solid-line arrow in FIG. 12A, a radius of curvature of the curved wire 12 reformed by the rod 29 is relatively smaller than that shown in FIG. 12B and the wire 12 can be reformed to be relatively strongly curved.

On the contrary, in the example shown in FIG. 12C, the position of the rod 29 located behind the nozzle 11 in the traveling direction is shifted in a direction away from the magnetic pole 13b, 63b by the servo motor 25, 75 as shown by a broken-like arrow without changing the interval between the nozzle 11 and the magnetic pole 13b, 63b with respect to the example shown in FIG. 12B. If the nozzle 11 is moved as indicated by the solid-line arrow in FIG. 12C, a radius of curvature of the curved wire 12 reformed by the rod 29 is relatively larger than that shown in FIG. 12B and the wire 12 can be reformed to be relatively weakly and moderately curved.

Thus, the curved degree of the wire 12 coming into contact with the rod 29 to be turned toward the magnetic pole 13b, 63b can be changed by shifting the position of the rod 29 located behind the nozzle 11 in the traveling direction in the width direction perpendicular to the traveling direction of the nozzle 11. In this way, a degree of reformation given to the wire 12 fed from the nozzle 11 can be easily changed. Therefore, a bulging degree of the wire 12 being wound on the magnetic pole 13b, 63b can be adjusted.

Further, in the above embodiment and the modification of the present embodiment, the nozzle 11 is reciprocally moved along the Z-axis direction by the nozzle moving mechanism 42, 70 and the stator core 13, 63 is rotated in the forward and reverse directions to rock the magnetic poles 13b, 63b being wire-wound. In the above embodiment and the modification of the present embodiment, the wire 12 is wound by rotationally moving the nozzle 11 in the rectangular shape around the magnetic pole 13b, 63b by combining these operations.

Such a method is particularly effective when a plurality of members to be wound are radially formed like the magnetic poles 13b, 63b. By rocking the magnetic pole 13b, 63b serving as the wound member, the slot 13c, 63c into which the nozzle 11 enters can be constantly held in parallel to the nozzle 11. Thus, it is possible to avoid such a situation where the nozzle 11 and the slot 13c, 63c intersect and the entrance of the nozzle 11 into the slot 13c, 63c becomes difficult.

In the above embodiment and the modification of the present embodiment, the nozzle moving mechanism 42, 70 has been described to drive the nozzle 11 in the three axis directions. However, the nozzle moving mechanism 42, 70 may be capable of moving the nozzle 11 in one or two axis directions as long as the nozzle 11 can be reciprocally moved along the Z-axis direction.

Further, even if a plurality of members to be wound are radially formed like the magnetic poles 13b, 63b, the nozzle moving mechanism 42, 70 capable of moving the nozzle 11 in the three axis directions may be used if the nozzle 11 can enter the slots 13c, 63c. That is, the wire 12 may be wound on the magnetic pole 13b, 63b by moving the nozzle 11 also in the Y-axis direction while moving the nozzle 11 in the vertical direction and rotationally moving the nozzle 11 in the rectangular shape by a combination of these operations.

Further, in the above winding apparatus 10, 60, both the nozzle 11 and the nozzle 29 separately formed are mounted in the nozzle holder 27. Thus, even when the wire diameter of the wire 12 to be wound on the magnetic poles 13b, 63b serving as the members to be wound is changed and the nozzle 11 is replaced by one including a wire feed hole 11a having a different inner diameter or when the rod 29 is replaced by one having a different outer diameter, it is sufficient to replace both or either one of those in the nozzle holder 27 and its exchange becomes easier.

On the other hand, if exchanges of the nozzle 11 and the rod 29 are not required, separate and independent exchanges of the nozzle 11 and the rod 29 may be avoided by integrally forming the rod 29 to the nozzle 11.

Further, although a case where the servo motors are used as the drive sources has been described in the above embodiment, stepping motors may be used as the drive sources.

The configuration, functions and effects of the embodiment of the present invention are summarized below.

The winding apparatus 10, 60 for winding the wire 12 around the wound member (magnetic pole 13b, 63b) includes the supporting tool 18, 68 for supporting the wound member (magnetic pole 13b, 63b), the nozzle 11 formed with the wire feed hole 11a through which the wire 12 passes, the relative moving mechanism for relatively moving the nozzle 11 with respect to the supporting tool 18, 68, the rod 29 provided adjacent to the nozzle 11 to be moved together with the nozzle 11 by the relative moving mechanism, and the rod rotating mechanism for rotating the rod 29 about the wire feed hole 11a around the wire feed hole 11a.

Further, in the winding apparatus 10, 60, the relative moving mechanism includes the nozzle moving mechanism (42, 70) for moving the nozzle 11 at least in a direction perpendicular to an axis of the wound member (magnetic pole 13b, 63b), and the servo motor 19 for moving the wound member (magnetic pole 13b, 63b) in a direction perpendicular to both the axis of the wound member (magnetic pole 13b, 63b) and the moving direction of the nozzle 11.

Further, in the winding apparatus 10, 60, the rod rotating mechanism includes the nozzle holder 27 for holding the nozzle 11 and the rod 29, and the servo motor 25, 75 for rotating the nozzle holder 27 about the wire feed hole 1 1a of the nozzle 11.

Further, in the winding method of the present embodiment for winding the wire 12 fed from the nozzle 11 around the wound member (magnetic pole 13b, 63b) side by relatively moving the nozzle 11 around the wound member (magnetic pole 13b, 63b), the rod 29 is caused to follow the nozzle 11 relatively moving with respect to the wound member (magnetic pole 13b, 63b) around the wound member (magnetic pole 13b, 63b) and the wire 12 coming into contact with the rod 29 to be turned toward the wound member (magnetic pole 13b, 63b) after being fed from the nozzle 11 is wound on the wound member (magnetic pole 13b, 63b).

In the winding apparatus 10, 60, the rod 29 is provided adjacent to the nozzle 11 and the rod rotating mechanism is provided to rotationally move the rod 29. Thus, in the case of winding the wire 12, the rod 29 follows the nozzle 11 if the nozzle 11 is relatively moved around the wound member (magnetic pole 13b, 63b).

According to the present embodiment and the modification of the present embodiment, the wire 12 fed from the nozzle 11, thereafter, comes into contact with the rod 29 and is curved from the nozzle 11 to move toward the wound member (magnetic pole 13b, 63b) by being turned toward the wound member (magnetic pole 13b, 63b). In this way, the wire 12 can be wound on the wound member (magnetic pole 13b, 63b) while being reformed in advance.

Even if the traveling direction of the nozzle 11 is changed, the rod 29 can be reliably caused to follow the nozzle 11, whose traveling direction has been changed, by rotationally moving the position of the rod 29 with respect to the nozzle 11 behind the nozzle 11 in the traveling direction by the rod rotating mechanism.

Further, a curved degree of the wire 12 turned toward the wound member (magnetic pole 13b, 63b) by coming into contact with the rod 29 can be changed by shifting the position of the rod 29 located behind the nozzle 11 in the traveling direction in the width direction with respect to the traveling direction by the rod rotating mechanism. That is, a degree of reformation given to the wire 12 fed from the nozzle 11 can be easily changed. Therefore, a bulging degree of the wire 12 being wound on the wound member (magnetic pole 13b, 63b) can be adjusted.

Although the embodiments of the present invention have been described in the above, the above-mentioned embodiment merely illustrates a part of application examples of the present invention, and the technical scope of the present invention is not intended to be limited to the specific configurations of the above-described embodiment.

The present application claims a priority based on Japanese Patent Application No. 2018-187944 filed on October 3, 2018 in the Japan Patent Office, the entire contents of which are incorporated herein by reference.

According to one aspect of the present disclosure, a winding apparatus for winding a wire around a wound member, includes a supporting tool configured to support the wound member, a nozzle formed with a wire feed hole, the wire passing through the wire feed hole, a relative moving mechanism configured to relatively move the nozzle with respect to the supporting tool, a rod provided adjacent to the nozzle to be moved together with the nozzle by the relative moving mechanism, and a rod rotating mechanism configured to rotate the rod about the wire feed hole around the wire feed hole.

According to other aspect of the present disclosure, a winding method for winding a wire fed from a nozzle around a wound member by relatively moving the nozzle around the wound member, includes causing a rod to follow the nozzle relatively moving with respect to the wound member around the wound member, and winding the wire turned toward the wound member by coming into contact with the rod after being fed from the nozzle on the wound member.

Aspects of an invention disclosed above may be defined as follow. Aspect 1 is a winding apparatus for winding a wire around a wound member, comprising: a supporting tool configured to support the wound member; a nozzle formed with a wire feed hole, the wire passing through the wire feed hole; a relative moving mechanism configured to relatively move the nozzle with respect to the supporting tool; a rod provided adjacent to the nozzle to be moved together with the nozzle by the relative moving mechanism; and a rod rotating mechanism configured to rotate the rod about the wire feed hole around the wire feed hole. Aspect 2 is the winding apparatus according to aspect 1, wherein the relative moving mechanism includes: a nozzle moving mechanism configured to move the nozzle at least in a direction perpendicular to an axis of the wound member; and a member moving mechanism for moving the wound member in a direction perpendicular to both the axis of the wound member and a moving direction of the nozzle. Aspect 3 is the winding apparatus according to aspect 1, wherein the rod rotating mechanism includes: a nozzle holder configured to hold the nozzle and the rod; and a motor configured to rotate the nozzle holder about the wire feed hole of the nozzle. Aspect 4 is a winding method for winding a wire fed from a nozzle around a wound member by relatively moving the nozzle around the wound member, comprising: causing a rod to follow the nozzle relatively moving with respect to the wound member around the wound member; and winding the wire turned toward the wound member by coming into contact with the rod after being fed from the nozzle on the wound member.

## Claims

1. A winding apparatus for winding a wire around a wound member, comprising:
a supporting tool configured to support the wound member;
a nozzle formed with a wire feed hole, the wire passing through the wire feed hole;
a relative moving mechanism configured to relatively move the nozzle with respect to the supporting tool;
a rod provided adjacent to the nozzle, the wire fed from the nozzle via the wire feed hole being configured to come into contact with the rod; and
a rod rotating mechanism configured to cause the rod to follow the nozzle relatively moving around the wound member by rotating the rod about the wire feed hole.

2. The winding apparatus according to claim 1, wherein the rod rotating mechanism is configured to change a degree of reformation given to the wire fed from the nozzle and coming into contact with the rod by shifting a position of the rod located behind the nozzle in a traveling direction to a width direction with respect to the traveling direction.

3. The winding apparatus according to claim 2, wherein the position of the rod located behind the nozzle in the traveling direction is shifted toward the wound member side by the rod rotating mechanism.

4. The winding apparatus according to claim 2, wherein the position of the rod located behind the nozzle in the traveling direction is shifted in a direction away from the wound member by the rod rotating mechanism.

5. The winding apparatus according to any one of claims 1 to 4, wherein the rod is integrally formed to the nozzle and moves together with the nozzle by the relative moving mechanism.

6. A winding method for winding a wire fed from a wire feed hole of a nozzle around a wound member by relatively moving the nozzle around the wound member, comprising:
causing a rod to follow the nozzle relatively moving around the wound member by rotating the rod provided adjacent to the nozzle about the wire feed hole; and
winding the wire turned toward the wound member by coming into contact with the rod after being fed from the nozzle on the wound member.

7. The winding method according to claim 6, further comprising:
change a degree of reformation given to the wire fed from the nozzle and coming into contact with the rod by shifting a position of the rod located behind the nozzle in a traveling direction to a width direction with respect to the traveling direction.

8. The winding method according to claim 6 or 7, wherein the rod is integrally formed to the nozzle.

9. A method for manufacturing an inner rotor type stator core or an outer rotor type stator core by the winding method according to any one of claims 6 to 8.
